# EUROPEAN PATENT SPECIFICATION

(11) **EP 0 879 442 B1**
(45) Date of publication and mention of the grant of the patent: **19.09.2001**
(21) Application number: 96904116.9
(22) Date of filing: 05.03.1996
(51) Int. Cl.: G04G 15/00, H01H 43/00

(54) **METHOD FOR CONTROLLING A SWITCH AND A LIGHT-ACTUATED SWITCH**
VERFAHREN ZUR STEUERUNG EINES SCHALTERS UND EINES LICHTAKTIVIERTEN SCHALTERS
PROCEDE DE COMMANDE D'UN INTERRUPTEUR ET INTERRUPTEUR ACTIONNE PAR LA LUMIERE

(30) Priority: 06.03.1995 FI 951021
(43) Date of publication of application: 25.11.1998
(73) Proprietor: Oy Lexel Finland AB, 02200 Espoo (FI)
(72) Inventor: ROSTEDT, Jan, FIN-02230 Espoo (FI)
(74) Representative: Tanhua, Pekka Vilhelm
(86) International application number: FI9600133
(87) International publication number: WO9627823

(56) References cited:
- WO-A-96/11428
- WO-A-96/11429
- DE-A- 3 043 936
- GB-A- 2 143 966
- SE-A- 9 403 448
- US-A- 4 172 998
- US-A- 4 213 062
- US-A- 5 343 121

## Description

The object of the invention is a method according to the preamble of claim 1 for controlling a switch. Another object of the invention is a light-actuated switch according to the preamble of claim 4.

A light-actuated switch is prior known in which the prevailing light intensity is measured by using a sensor and the actual light-actuated switch is controlled on the basis of messages received from this sensor so that loads, such as illuminators, connected to the light-actuated switch are controlled automatically at dawn and at dusk according to changes in the prevailing lighting conditions. Such switch is known from, for example, US 4 213 062 A, US 4 172 998 A, and GB 2 143 966 A.

One disadvantage in the above presented light-actuated switch is that the load, such as an illuminator, is connected to the electrical network at all those times when the prevailing light intensity falls below the set threshold value and respectively, the load is disconnected when the prevailing light intensity exceeds the set threshold value. The device is switched on during the entire time of twilight and/or darkness. During the early morning hours, it is not often necessary to maintain lighting and this increases electricity consumption.

The aim of this invention is to improve the control of the operation of a switch, especially a light-actuated switch, and on the other hand to bring forward a new light-actuated switch and by using this method and the switch, the above presented problem can be avoided. Furthermore, the aim of the invention is to bring forward a simple and reliable method for controlling a switch and also bring forward a light-actuated switch which actually makes use of this method.

The method according to the invention is characterized by the description presented in the characterizing part of claim 1 and respectively, the light-actuated switch according to the invention is described in the characterizing part of claim 4.

In the method according to the invention for controlling the switch, the changing of the prevailing light intensity is observed and the switch is controlled on the basis of the prevailing light intensity so that the switch is switched on when light intensity falls below the set threshold value in which case a load, such as an illuminator, is connected to the source of electricity and respectively, the switch is switched off when light intensity exceeds the set threshold value, and then the load is disconnected from the source of electricity. According to the invention, when a sharp and relatively stable change in the prevailing light intensity is detected, it is interpreted as morning and/or evening depending on the direction of the change and from these moments of changes in light intensities, the rising time of the sun and/or respectively the setting time of the sun is calculated and, according to the calculated rising time and/or setting time of the sun, a clock is synchronized and by means of this clock, a daily timing of the switch is achieved as well as the control of the switching of a load, such as an illuminator, connected via the switch to a source of electricity and switched on and off from this source by following a desired program.

A light-actuated switch according to the invention comprises a light sensor for measuring prevailing light intensity and a regulating unit for controlling the actual switch unit according to changes in light intensity. According to the invention, the regulating unit comprises a clock unit which has: an evaluation unit which is used for detecting strong and relatively stable changes in prevailing light intensity; a calculation unit in which the moment of sunrise and/or sunset is determined on the basis of changes in light intensity; a clock and synchronizing means in which a clock is adjusted and, if needed, synchronized on the basis of the moment of sunrise and/or sunset, and by means of this clock, the daily timing of the switching unit is achieved as well as the control of the switching of the illuminator load connected via the switching unit to an electrical device and off from it by following a desired program.

One advantage of the invention is that the clock of the light-actuated switch or a corresponding device can be synchronized automatically with relation to time. This makes the installation of the light-actuated switch easier and eliminates the maintenance work connected with having to install possible batteries. Furthermore, another advantage of the invention is that any possible power failure will not lead to problems for the light-actuated switch or a similar device since the clock of the device is synchronized automatically. Furthermore, another advantage of the invention is that the light sensor which already exists in light-actuated switches can thus be used for two purposes: first, for switching on normal lighting or a corresponding load to an electrical network in the evening and respectively for switching it off from the electrical network in the morning and secondly, for synchronizing the internal clock which will be set in the light-actuated switch to the daily time.

In the following, the invention is described in detail by referring to the attached drawings in which
fig. 1 shows a light-actuated switch according to the invention in the form of a block diagram;
fig. 2 shows schematically the procedure for determination of the moments of sunrise and sunset on the basis of changes in light intensity;
fig. 3 shows in the form of a block diagram the operation of the regulating unit for synchronizing the clock; and
fig. 4 in which fig. 4a shows an example for controlling the operation of a switch unit via a light-actuated switch according to the invention; fig. 4b via a conventional light-actuated switch; and fig. 4c shows a comparison between these two switches.

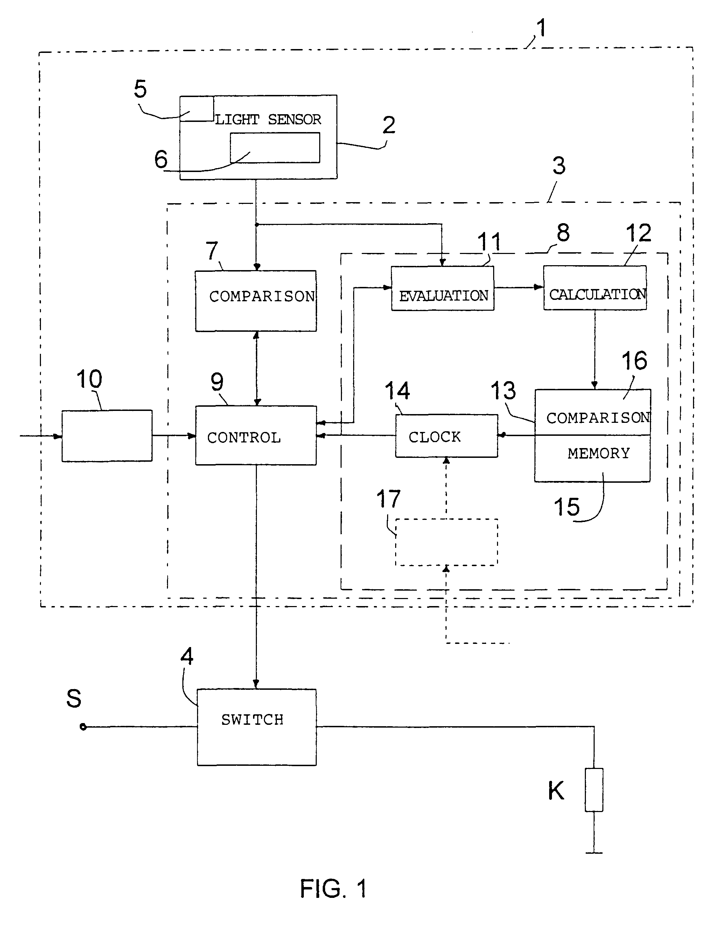

A light-actuated switch 1 according to the invention has been shown in the form of a block diagram in Fig. 1. The light-actuated switch 1 comprises a light sensor 2, a regulating unit 3 and a switch unit 4. The light sensor 2 comprises a light diode 5 or its equivalent, most preferably a semiconductor light detector which can be used for observing prevailing light intensity preferably over the entire spectral coverage area. Furthermore, the light sensor 2 comprises preferably a preamplifier 6 by which the signal provided by the light diode 5 or its equivalent is amplified to be suitable for feeding into the regulating unit 3. The regulating unit 3 comprises a comparison unit 7, a clock unit 8 and a control unit 9.

In the comparison unit 7 of the regulating unit 3, the signal of the prevailing light intensity received from the light sensor 2 is compared with a previously recorded threshold value of light intensity for controlling the control unit 9 and also the switch unit 4. When the light intensity signal received from the light sensor 2 exceeds the set threshold value for a sufficiently long time interval (or sufficiently slowly), a signal is transmitted from the comparison unit 7 to the control unit 9 and on the basis of this signal, the switch unit 4 is further controlled by the control unit 9 so that a load K becomes d is connected to a source of electricity, such as from an electricity network S through this switch unit. Equally, when the light intensity signal received from the light sensor 2 falls below the set threshold value for a sufficiently long time interval (or sufficiently slowly), a signal is transmitted from the comparison unit 7 to the control unit 9 and on the basis of this signal, the switch unit 4 is further controlled by the control unit 9 so that the load K becomes connected from the electricity network S via this switch unit.

The clock unit 8 of the regulating unit 3 comprises furthermore an evaluation unit 11, a calculation unit 12, a synchronization unit 13 and a clock 14. The input of the evaluation unit 11 has been most preferably connected with the input of the comparison unit 7 to the same input of the regulating unit 3. By using the evaluation unit 11, prominent and relatively stable changes are detected in the signals emitted from the light sensor 2, these being proportional to light intensity. By using the calculation unit 12, the moment of sunrise and/or sunset is calculated on the basis of the major changes in light intensity. By using the synchronization unit 13, the clock 14 is synchronized on the basis of the moment of sunrise or sunset or both of them. By using the clock 14, the daily timing of the switch unit 4 is controlled by the control unit 9.

The synchronization unit 13 comprises a memory unit 15 and a comparison unit 16. Into the memory unit 15, calendar information and local times of sunrises and/or sunsets have been recorded. In the comparison unit 16, times of sunrises and/or sunsets which have been calculated on the basis of information about changes in light intensity are compared with the calendar information and times of sunrises and/or sunsets stored in the memory unit 15. When, for example, the date and the time of sunrise are both known and, on the basis of information about changes in light intensity, the time of sunrise has been detected and calculated, if one compares these two sets of data, the time of the clock 14 can be set right, in other words, it can be synchronized into geodetic time. The calculated time of sunrise and time of sunrise and calendar information stored in the memory unit should match each other, that being the case, the clock 14 is at the right geodetic time. If this is not the case, the time of the clock 14 is moved and adjusted so that these times do match.

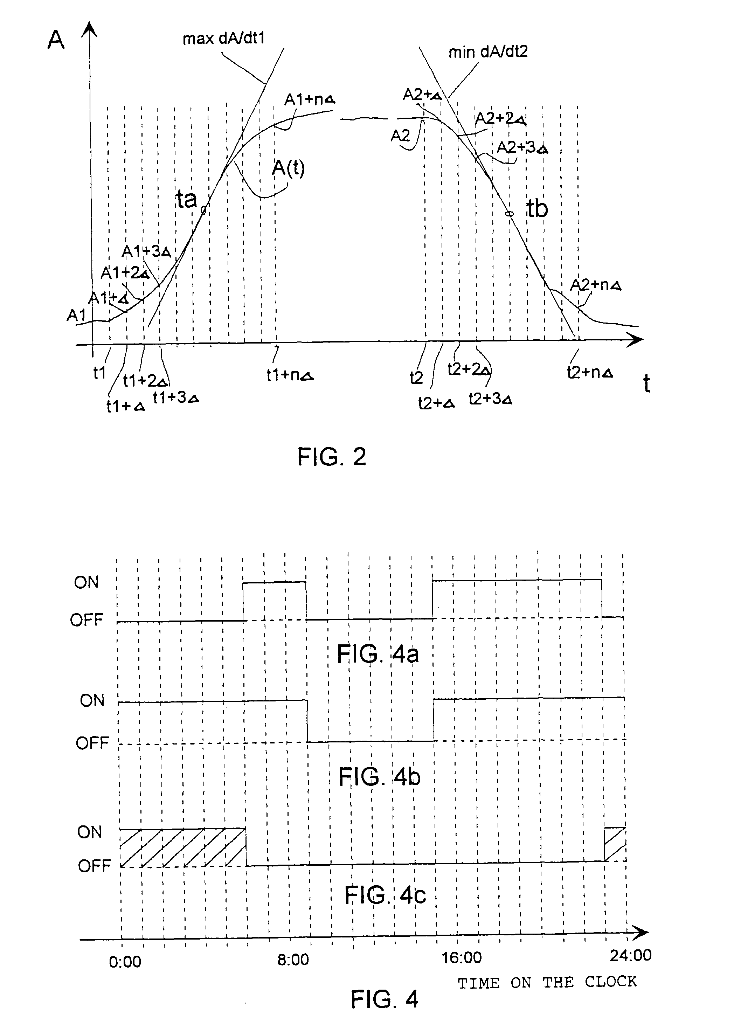

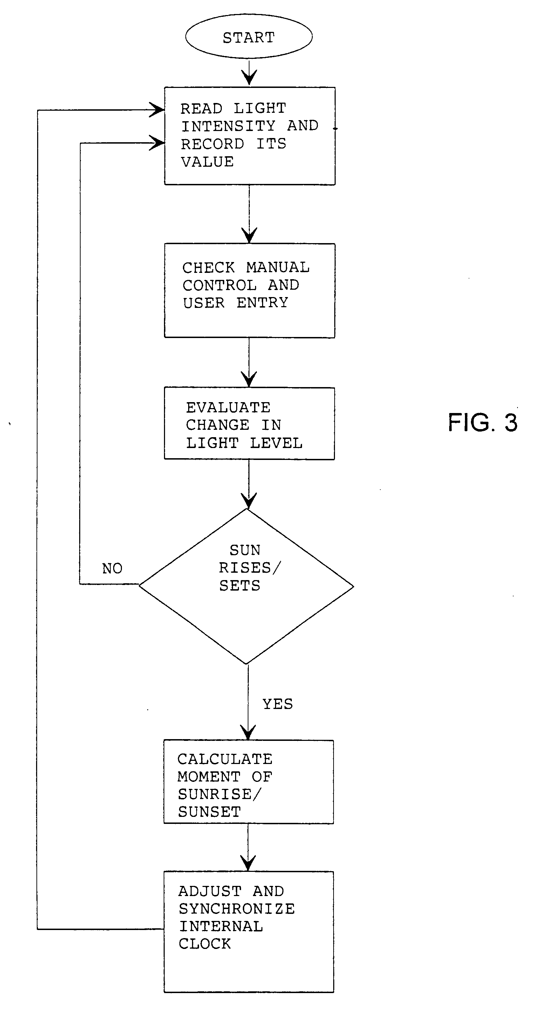

The operation of the clock unit 8 has been visualized by a graph in Fig. 2 and a block diagram in Fig. 3. The abscissa of the coordinates in Fig. 2 is the time t and the ordinate is the prevailing light intensity A. Into the evaluation unit 11 of the clock unit 8, a light intensity signal A₁ is fed from the light sensor 2 and it is read at the time point t₁ and recorded into the memory of the evaluation unit. Thereafter, the manual control and user interfaces 10 which have been connected to the control unit are adjusted. If the switching unit 4 has been set to a conduction state by using the manual control that is the load K has been connected to electrical network S, the light intensity signal most preferably will not be processed further, at least not at this stage. A remote control command can also alternatively be fed through the user interface for connecting the load K to the electrical network and/or for disconnecting it from the electrical network. The changes in light intensity A are detected by comparing the newly measured and read light intensity value A₁ to the previous, read and recorded light intensity values. If no changes are detected in light intensity values, the next light intensity signal A_{1+Δ} is read from the light sensor 2 at the time point t_{1+Δ} and recorded into the memory of the evaluation unit 11. In this way, values of light intensity signals A₁, A_{1+Δ}, A_{1+2Δ}, A_{1+3Δ}, ... , A_{1+nΔ} are accumulated into the memory for a suitable predetermined duration of time, such as a 30 min time span, at suitable time intervals Δ, such as 30 sec, at time points t₁, t_{1+Δ}, t_{1+2Δ}, t_{1+3Δ}, ... , t_{1+nΔ} (n= 1, 2, 3, ...).

Through these light intensity values, one can envisage that a curve A(t) can be drawn which represents the change in prevailing light intensity A as a function of time t. When a change in light intensity A is detected which does not immediately rise/fall, for example, within 5-20 min, this is considered as a relatively stable change: the sun is then either rising or setting. To determine the sharpest moment tₐ of change in light intensity, the derivative dA/dt₁ of the light intensity is calculated in the calculation unit 12 at sequential time points t₁, t_{1+Δ}, t_{1+2Δ}, t_{1+3Δ}, ... , t_{1+nΔ} and the maximum point of the derivative max dA/dt₁ at time point tₐ is interpreted as the most prominent moment of change of light. This moment tₐ of the major change in light intensity corresponds in this case to the moment of sunrise and this information is transferred from the calculation unit 12 to the synchronization unit 13 for the adjustment and synchronization of the clock 14. After the adjustment and/or synchronization of the clock has been performed, the next light intensity signal A_{1+(n+1)Δ} is read from the light sensor 2 at the time point t_{1+(n+1)Δ} and recorded into the memory of the evaluation unit 11 after which the above described phases of operation are repeated.

Correspondingly, the moment of sunset is detected by determining at time points t₂, t_{2+Δ}, t_{2+2Δ}, t_{2+3Δ}, ... , t_{2+nΔ} the corresponding light intensity values A₂, A_{2+Δ}, A_{2+2Δ}, A_{2+3Δ}, ... , A_{2+nΔ}. On the basis of these light intensities, the minimum point of the derivative dA₂/dt₂ is determined and on the basis of this, the corresponding time point t_{b}. This time point t_{b} then corresponds to the time of sunset.

Values of light intensity signal A; A₁, A_{1+Δ}, A_{1+2Δ}, A_{1+3Δ}, ... , A_{1+nΔ} are read into the memory of the evaluation unit 11 from a predetermined time span at suitable intervals at successive time points t₁, t_{1+Δ} , t_{1+2Δ}, t_{1+3Δ}, ... , t_{1+nΔ} (n=1, 2, 3, ...) as has been stated above. The memory is, however, finite; for example, a hundred successive values A of light intensity signal are read into it, after which the newest value of the light intensity signal substitutes the oldest value of the light intensity signal in the memory.

The time of sunrise and/or sunset tₐ, t_{b} which has been calculated in the synchronization unit 13 is compared in the comparison unit 16 with the calendar information which is accessed from the memory unit 15 that is the time of sunrise and/or sunset according to the respective date. Should there be differences in times, the clock 14 is synchronized by setting it to the proper time of day according to the calculated time of sunrise and/or sunset tₐ, t_{b}.

In Finland, as in many other European countries, it is general practice to move the clocks into summer time (or daylight-saving time) in spring and to return to normal time that is to winter time (or standard time) in the autumn. Summer time is usually one hour ahead of normal geodetic time. This transition to summer time and the return to standard time can naturally be programmed into the synchronization unit 13 so that the basis for comparison stays always the same, no matter what the prevailing clock time actually is. Alternatively, a time changing unit 17 can be connected to the clock 14 and by using it, the time of the clock 14 can be moved optionally either forward or backward, most preferably by one hour changes. The time changing unit 17 has, for example, been connected to one or more external switches of the regulating unit 3 and via these switches, the time can be set.

The operation of a light-actuated switch according to the invention is visualized in Fig. 4a by using the daily control of lighting. By using the switching unit 4, the lights have been switched off from the source of electricity S during the time interval 23.00-6.00 o'clock. Controlled by the clock 14 at a previously programmed time point, the switch unit 4 is arranged to switch on the lights in the morning before sunrise; in this case at 6.00 o'clock. When it is detected by using the light sensor 2 and the comparison unit 7 that the sun has risen and the prevailing light intensity has exceeded the set threshold value, the switch unit 4 is set by using the control unit 9 into a switching state so that the illuminator load is disconnected from the source of electricity. In the example shown in Fig. 4a this takes place at 9.00 o'clock. When it is detected again by using the light sensor 2 and the comparison unit 7 that it is now evening and the prevailing light intensity falls below the threshold value, the switch unit 4 is set by using the control unit 9 into a switching state to ensure that the illuminator load is connected to the source of electricity. According to Fig. 4a this takes place at 15.00 o'clock. The clock 14 at a previously programmed time point, such as 23.00 o'clock, via the control unit 9, now ensures that one or more switches of the switch unit 4 are switched off and thus the illuminator load is disconnected from the source of electricity.

Fig. 4b shows the operation of a conventional light-actuated switch in which a light sensor controls the lighting via switches by using a comparator and a control unit. The lights are on throughout the night; in the morning the change in prevailing light intensity is detected at dawn as the light level exceeds the threshold value on the basis of which the lights are switched off; in this example at 9.00 o'clock. Equally, the lights are switched on at 15.00 o'clock as the sun sets and it starts to get dark. Fig. 4c shows the saving in the time the lights are on and the resulting electric energy which is achieved by a solution according to the invention according to the example shown in Fig. 4a. In the striped areas, the lighting has been switched off and the electric energy which would normally be used is thus saved when a light-actuated switch according to the invention is used.

Above, the invention has been described by referring mainly to one of its preferable embodiments but it is clear that the invention can be modified in many ways within the frame of the innovative idea presented by the attached claims.

## Claims

1. A method for controlling a switch (4) and in this method the changing of prevailing light intensity is observed and the switch is controlled on the basis of the prevailing light intensity so that the switch is switched on when light intensity falls below the set threshold value and then a load (K) such as an illuminator is connected to a source of electricity (S) and conversely, the switch is switched off when the light intensity is greater than the set threshold value and then the load is disconnected from the source of electricity, **characterized in that**
- when a sharp relatively stable change in prevailing light intensity (A) is detected, this is interpreted as morning and/or evening depending on the direction of the change;
- of these moments of changes in light intensities, the time of sunrise (tₐ) and/or respectively the time of sunset (t_{b}) is calculated; and
- according to the calculated time of sunrise and/or sunset, a clock (14) is synchronized and by means of this clock, the daily timing of the switch (4) is achieved as well as the control of the switching of a load (K), such as an illuminator, connected via the switch to the source of electricity (S) and off from it by following a desired program.

2. A method according to claim 1, **characterized in that** the time of sunrise and/or respectively the time of sunset is calculated from the moments of the most prominent changes in light intensities and these results are compared with the calendar information which has been recorded into a memory and with the times of sunrise and sunset and, on the basis of this information received from the comparison, the time of the clock is set.

3. A method according to claim 1, **characterized in that** the difference between the local time and the geodetic time is corrected by transmitting the value of the difference into the clock.

4. A light-actuated switch (1) which comprises a light sensor (2) for measuring the prevailing light intensity and a regulating unit (3) for controlling the actual switch unit (4) according to changes in light intensity, **characterized in that** the regulating unit (3) comprises a clock unit (8) which contains:
- an evaluation unit (11) which can detect strong and relatively stable changes in prevailing light intensity;
- a calculation unit (12) in which the moment of sunrise and/or sunset is determined on the basis of changes in light intensity;
- a clock (14) and a synchronization unit (13) in which the clock (14) is adjusted on the basis of the moment of sunrise and/or sunset and when necessary, synchronized, and by means of this clock, the daily timing of the switch unit (4) is achieved as well as the control of the switching of an illuminator load (K) connected via the switch unit to the source of electricity (S) and off from it by following a desired program.

5. A light-actuated switch according to claim 4, **characterized in that** the synchronization unit (13) comprises a memory unit (15) into which calendar information has been recorded as well as the local times of sunrises and/or sunsets, and a comparison unit (11) in which the times of sunrises and/or sunsets, which have been calculated on the basis of the information about changes in light intensity, are compared with the times of sunrises and/or sunsets obtained from the calendar information, and on the basis of this information received from the comparison, the time of the clock (14) of the light-actuated switch is set.

6. A light-actuated switch according to claim 4, **characterized in that** the regulating unit (3) comprises a time changing unit (17) which is connected to the clock (14) for correcting the difference between the local time and the geodetic time in the clock.

## Patentansprüche

1. Verfahren zum Steuern eines Schalters (4) in welchem die Änderung der vorherrschenden Lichtintensität beobachtet wird und der Schalter auf der Basis der vorherrschenden Lichtintensität so gesteuert wird, dass der Schalter eingeschaltet wird, wenn die Lichtintensität unter den eingestellten Schwellenwert fällt und dann eine Last (K) wie z. B. eine Beleuchtung mit einer Stromquelle (S) verbunden wird und vice versa der Schalter ausgeschaltet wird, wenn die Lichtintensität größer als der eingestellte Schwellenwert ist und dann die Last von der Stromquelle getrennt wird,
**dadurch gekennzeichnet, dass**
- wenn eine scharfe und relativ stabile Änderung in der vorherrschenden Lichtintenaltät (A) detektiert wird, diese als Morgen und/oder Abend entsprechend der Richtung der Änderung interpretiert wird;
- aus diesem Zeitpunkten der Änderungen der Lichtintensitäten die Zeit des Sonnenaufgangs (tₐ) und/oder entsprechenderweise die Zeit des Sonnenuntergangs (t_{b}) errechnet wird; und
- entsprechend der errechneten Zeit des Sonnenaufgangs und/oder Sonnenuntergangs eine Uhr (14) synchronisiert wird und mittels dieser Uhr die tägliche Zeiteinstellung der Schalters (4) erhalten wird als auch die Steuerung des Schaltens einer Last (K), wie z. B. einer Beleuchtung, die mittels des Schalters entsprechend einem gewünschten Programm. mit der Stromquelle (S) verbunden oder von dieser getrennt wird.

2. Verfahren nach Anspruch 1,
**dadurch gekennzeichnet, dass** die Zeit des Sonnenaufgangs und/oder entsprechend die Zeit des Sonnenuntergangs aus den Zeitpunkten der markantesten Änderungen der Lichtintensitaten errechnet wird und diese Resultate mit Kalenderinformationen verglichen werden, die in einem Speicher gespeichert sind und mit den Zeiten des Sonnenaufgangs und -Untergangs, und dass auf der Basis dieser aus dem Vergleich erhaltenen Information die Zeit der Uhr gesetzt wird.

3. Verfahren nach Anspruch 1,
**dadurch gekennzeichnet, dass** der Unterschied zwischen der lokalen Zeit und der geodätischen Zeit korrigiert wird durch Übermittlung des Wertes der Änderung an die Uhr.

4. Lichtbetätigter Schalter (1) der einen Lichtsensor (2) enthält um die vorherrschende Lichtintensität zu messen und eine Regeleinheit (3) um die aktuelle Schalteinheit (4) entsprechend Änderungen in der Lichtintensität zu steuern,
**dadurch gekennzeichnet, dass** die Regeleinheit (3) eine Uhreneinheit (8) umfasst, die folgende Bestandteile enthält:
- eine Bewertungseinheit (11), die starke und relativ stabile Änderungen in der vorherrschenden Lichtintensität detektieren kann;
- eine Recheneinheit (12), in der der Zeitpunkt des Sonnenaufgangs und/oder Sonnenuntergangs auf der Basis der Änderungen in der Lichtintensität bestimmt wird.
- eine Uhr (14) und eine Synchronisiereinheit (13), in der die Uhr (14) auf der Basis des Zeitpunktes des Sonnenaufgangs und/oder Sonnenuntergangs eingestellt und, wenn nötig, synchronisiert wird, und mittels dieser Uhr die tägliche Zeiteinstellung der Schalteinheit (4) erreicht wird als auch die Steuerung des Schaltens einer Beleuchtungslast (K), die mittels der Schalteinheit entsprechend einem gewünschten Programm mit einer Stromguelle (S) verbunden bzw. von dieser getrennt wird.

5. Lichtbetätigter Schalter nach Anspruch 4,
**dadurch gekennzeichnet, dass** die Synchronisiereinheit (13) eine Speichereinheit (15) enthält, in der Kalenderinformationen als auch die lokalen Zeiten der Sonnenaufgänge und/oder Sonnenuntergange gespeichert sind, und eine Vergleichseinheit (11), in der die Zeiten der Sonnenaufgänge und/oder Sonnenuntergänge, die auf der Basis der Informationen über Änderungen in der Lichtintensität errechnet wurden, mit denjenigen Zeiten der Sonnenaufgänge und/oder Sonnenuntergänge verglichen werden, die von den Kalenderinformationen erhalten werden, und auf der Basis dieser aus dem Vergleich erhaltenen Informationen die Zeit der Uhr (14) des lichtbetätigten Schalters eingestellt wird.

6. Ein lichtbetätigter Schalter gemäß Anspruch 4,
**dadurch gekennzeichnet, dass** die Regeleinheit (3) eine Zeitänderungseinheit (17) enthält, die mit der Uhr (14) verbunden ist, um den Unterschied zwischen der lokalen zeit und der geodätischen zeit in der Uhr zu korrigieren.

## Revendications

1. Procédé pour commander un commutateur (4) et, dans ce procédé, le changement d'intensité lumineuse prédominante est observé et le commutateur est commandé sur la base de l'intensité lumineuse prédominante de sorte que le commutateur est commuté à l'état passant lorsqu'une intensité lumineuse chute au-dessous de la valeur de seuil établie et ensuite une charge (K) telle qu'un dispositif d'éclairage est reliée à une source d'électricité (S) et à l'inverse, le commutateur est commuté à l'état bloqué lorsque l'intensité lumineuse est supérieure à la valeur de seuil établie, et alors la charge est déconnectée de la source d'électricité,
**caractérisé en ce que**
- lorsqu'un changement net relativement stable d'intensité lumineuse prédominante (A) est détecté, celui-ci est interprété comme un matin et/ou un soir en fonction de la direction du changement,
- parmi ces moments de changements d'intensités lumineuses, l'heure de lever de soleil (tₐ) et/ou respectivement l'heure de coucher de soleil (t_{b}) est calculée, et
- conformément à l'heure calculée de lever de soleil et/ou de coucher de soleil, une horloge (14) est synchronisée et, par l'intermédiaire de cette horloge, le cadencement quotidien du commutateur (4) est obtenu ainsi que la commande de la commutation d'une charge (K), telle qu'un dispositif d'éclairage, connectée via le commutateur à la source d'électricité (S) et de sa déconnexion en suivant un programme voulu.

2. Procédé selon la revendication 1, **caractérisé à ce que** l'heure de lever de soleil et/ou respectivement l'heure de coucher de soleil est calculée à partir des moments des changements les plus prédominants d'intensités lumineuses et ces résultats sont comparés aux informations de calendrier qui ont été enregistrées dans une mémoire et aux heures de lever de soleil et de coucher de soleil et, sur la base de ces informations reçues depuis la comparaison, l'heure de l'horloge est établie.

3. Procédé selon la revendication 1, **caractérisé en ce que** la différence entre l'heure locale et l'heure géodésique est corrigée en transmettant la valeur de la différence dans l'horloge.

4. Commutateur actionné par lumière (1) qui comporte un capteur de lumière (2) pour mesurer l'intensité lumineuse prédominante et une unité de régulation (3) pour commander l'unité de commutation effective (4) conformément à des changements d'intensité lumineuse, **caractérisé en ce que** l'unité de régulation (3) comporte une unité d'horloge (8) qui contient :
- une unité d'évaluation (11) qui peut détecter des changements importants et relativement stables d'intensité lumineuse prédominante,
- une unité de calcul (12) dans laquelle le moment de lever de soleil et/ou de coucher de soleil est déterminé sur la base de changements d'intensité lumineuse,
- une horloge (14) et une unité de synchronisation (13) dans laquelle l'horloge (14) est ajustée sur la base du moment de lever de soleil et/ou de coucher de soleil et, lorsque nécessaire, est synchronisée, et par l'intermédiaire de cette horloge, le cadencement quotidien de l'unité de commutation (4) est obtenu ainsi que la commande de la commutation d'une charge d'éclairage (K) connectée via l'unité de commutation à la source de l'électricité (S) et de sa déconnexion en suivant un programme voulu.

5. Commutateur actionné par lumière selon la revendication 4, **caractérisé en ce que** l'unité de synchronisation (13) comporte une unité de mémoire (15) dans laquelle des informations de calendrier ont été enregistrées ainsi que les heures locales de levers de soleil et/ou couchers de soleil, et une unité de comparaison (11) dans laquelle les heures de levers de soleil et/ou de couchers de soleil, qui ont été calculées sur la base des informations concernant des changements d'intensité lumineuse, sont comparées aux heures de levers de soleil et/ou couchers de soleil obtenues à partir des informations de calendrier, et sur la base de ces informations reçues depuis la comparaison, l'heure de l'horloge (14) du commutateur actionné par lumière est établie.

6. Commutateur actionné par lumière selon la revendication 4, **caractérisé en ce que** l'unité de régulation (3) comporte une unité de changement d'heure (17) qui est connectée à l'horloge (14) pour corriger la différence entre l'heure locale et l'heure géodésique dans l'horloge.
